# EUROPÄISCHE PATENTSCHRIFT

(11) **EP 4 253 109 B1**
(45) Veröffentlichungstag und Bekanntmachung des Hinweises auf die Patenterteilung: **08.05.2024**
(21) Anmeldenummer: 22164777.9
(22) Anmeldetag: 28.03.2022
(51) Int. Cl.: B60J 5/06, A44B 11/12, B60P 7/08

(54) **GURTSPANNER**
BELT TENSIONER
TENDEUR DE COURROIE

(43) Veröffentlichungstag der Anmeldung: 04.10.2023
(73) Patentinhaber: IMA-FM-1896 GmbH & Co. KG, 59846 Sundern (DE)
(72) Erfinder: Schlüter, Robin, 59846 Sundern (DE); Rademacher, Stephan, 59846 Sundern (DE); Arnold, Jens, 58802 Balve (DE); Apolinarski, Andre, 59846 Sundern (DE)
(74) Vertreter: Patentanwälte Dörner & Kötter PartG mbB

(56) Entgegenhaltungen:
- WO-A1-84/00712
- DE-U1-202007 010 262
- GB-A- 914 085
- US-A1- 2015 191 114

## Beschreibung

Die Erfindung betrifft einen Gurtspanner zum Spannen einer Plane eines Lkws oder eines Anhängers, umfassend ein U-förmig ausgebildetes Basisteil mit einem Boden und zwei Seitenwangen, und einen an den Seitenwangen des Basisteils aus einer Offenstellung in eine Geschlossenstellung des Gurtspanners schwenkbar gelagerten, U-förmig ausgebildeten Spannhebel mit einem Deckelteil und zwei Seitenwangen.

Derartige Gurtspanner, die beispielsweise zum Festspannen einer Plane von Lastkraftwagen, Anhängern, Aufliegern für Sattelzugmaschinen, Eisenbahnwaggons o.dgl. vorgesehen sind, sind hinlänglich bekannt und beispielsweise in der EP 3 401 160 A1 beschrieben. Derartige Gurtspanner, auch als Planenspanner bezeichnet, haben sich in der Praxis bewährt. Eine Prüfung von Planenspannern nach der Europäischen Norm EN 12641-2 2019 hat ergeben, dass es in Einzelfällen dazu kommen kann, dass ein mit dem Gurtspanner gespannter Gurt über die dort genannten Grenzwerte durchrutscht. Zur Durchrutschsicherung werden daher häufig Gummirollen eingesetzt, welche ein Durchrutschen des Gurtes verhindern sollen. Diese Lösung hat sich jedoch als unzureichend zuverlässig erwiesen. Dokumente WO8400712 A1, US 2015/191114 A1 und DE 20 2007 010262 U1 offenbaren weitere Beispiele von Gurtspannern.

Hier will die Erfindung Abhilfe schaffen. Der Erfindung liegt die Aufgabe zugrunde, einen Gurtspanner der vorgenannten Art zu schaffen, bei dem ein Durchrutschen eines mit dem Gurtspanner gespannten Gurtes zuverlässig verhindert ist. Gemäß der Erfindung wird diese Aufgabe durch einen Gurtspanner mit den Merkmalen des kennzeichnenden Teils des Patentanspruchs 1 gelöst.

Mit der Erfindung ist ein Gurtspanner geschaffen, bei dem ein Durchrutschen eines mit dem Gurtspanner gespannten Gurtes zuverlässig verhindert ist. Dadurch, dass ein Gurtklemmstück angeordnet ist, das zwischen den Seitenwangen des Basisteils schwenkbar gelagert und über ein Federelement gegen den Boden des Basisteils vorgespannt ist, ist eine Klemmung des Gurtes bewirkt, wodurch einem Durchrutschen des Gurtes entgegengewirkt ist.

Gemäß der Erfindung ist an dem Gurtklemmstück ein Bedienhebel angeordnet, über den das Gurtklemmstück schwenkbar ist. Hierdurch ist ein Lösen des Gurtes gegen die Vorspannung des Federelementes vereinfacht.

In Ausgestaltung der Erfindung ist an dem Gurtklemmstück oder an dem Bedienhebel ein Schließblech angeordnet, das eine Ausnehmung aufweist, in die ein an dem Deckelteil des Spannhebels angeordneter Haken in einer Geschlossenstellung des Spannhebels eingreift und das Schließblech hintergreift. Hierdurch ist ein wirksamer Verschluss des Gurtspanners erzielt.

In weiterer Ausgestaltung der Erfindung sind der Haken des Spannhebels und die Ausnehmung des Schließblechs derart ausgebildet, dass das an dem Gurtklemmstück angeordnete Schließblech durch eine Schwenkbewegung entgegen der Vorspannung des Federelements außer Eingriff mit dem Haken des Spannhebels bringbar ist. Hierdurch ist das Öffnen des Verschlusses vereinfacht. Bevorzugt ist das Federelement eine Torsionsfeder.

In Weiterbildung der Erfindung ist der Haken durch einen abgewinkelten oder umgebogenen Abschnitt des Deckelteils gebildet. Hierdurch ist eine einteilige Gestaltung erzielt, wodurch eine kostengünstige Herstellung ermöglicht ist. Durch eine ausreichend breite Dimensionierung des Hakens ist eine Verteilung der Haltekräfte erzielbar, wodurch Funktionsstörungen aufgrund eines Verkannten des Hakens entgegengewirkt ist. Vorteilhaft ist die Breite des Hakens etwas geringer, als die Breite der Ausnehmung des Schließblechs. Vorteilhaft sind das Basisteil und/oder der Spannhebel jeweils als einteiliges Blechbiegestanzteil hergestellt.

Gemäß der Erfindung überragt der Bedienhebel des Gurtklemmstücks in einer Geschlossenstellung des Spannhebels dessen Deckelteil in Längsrichtung. Hierdurch ist ein Öffnen des Verschlusses durch einfaches, einhändiges Ziehen des Bedienhebels in Richtung des Deckelteils ermöglicht.

In weiterer Ausgestaltung der Erfindung weist das Deckelteil einen Gurtführungsabschnitt und einen Handhabungsabschnitt auf, zwischen denen eine Ausnehmung zur Durchführung eines Gurtes angeordnet ist, wobei der Haken an dem Handhabungsabschnitt angeordnet ist. Vorteilhaft ist der Gurtführungsabschnitt an seiner dem Handhabungsabschnitt zugewandten Seite abgerundet, vorzugsweise um 180° umgebogen.

In Weiterbildung der Erfindung weist das Gurtklemmstück an seiner dem Boden des Basisteils zugewandten Seite eine zylinderausschnittförmige Mantelfläche auf, die derart exzentrisch mit einer zwischen den Seitenwangen des Basisteils angeordneten Achse schwenkbar verbunden ist, dass durch Schwenken des Gurtklemmstücks eine Veränderung des Abstandes zwischen Gurtklemmstück und Boden erzielt ist. Durch die auf einen eingeklemmten Gurt einwirkende Spannkraft bewirkt eine Drehung des Gurtklemmstücks eine Verringerung seines Abstands zum Boden des Basisteils, wodurch die Klemmkraft erhöht wird, wodurch ein Durchrutschen des Gurtes wirksam verhindert ist.

In Ausgestaltung der Erfindung ist die zylindermantelausschnittförmige Mantelfläche mit einer Flächenverzahnung versehen. Hierdurch ist die Reibung zwischen Gurt und Gurtklemmstück erhöht, wodurch einem Durchrutschen des Gurtes weiter entgegengewirkt ist.

In weiterer Ausgestaltung der Erfindung sind in den Seitenwangen des Basisteils zwei gegenüberliegend angeordnete, nach innen kragende Auswölbungen eingebracht, an denen der Spannhebel in einer Offenstellung anliegt. Hierdurch ist eine definierte Endlage für den Spannhebel bewirkt, wodurch das Einfädeln eines Gurtes erleichtert ist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung eines Gurtspanners einer ersten räumlichen Ansicht im Teilschnitt;
- Figur 2: die Darstellung des Gurtspanners aus Figur 1 in einer weiteren räumlichen Ansicht im Teilschnitt;
- Figur 3: die Detaildarstellung des Ausschnitts II aus Figur 2;
- Figur 4: die Darstellung des Gurtspanners aus Figur 1 im Längsschnitt
a) in einer Offenstellung;
b) mit eingelegtem Gurt in einer Offenstellung;
c) in der Gechlossenstellung;
d) mit eingelegtem Gurt in der Gechlossenstellung;

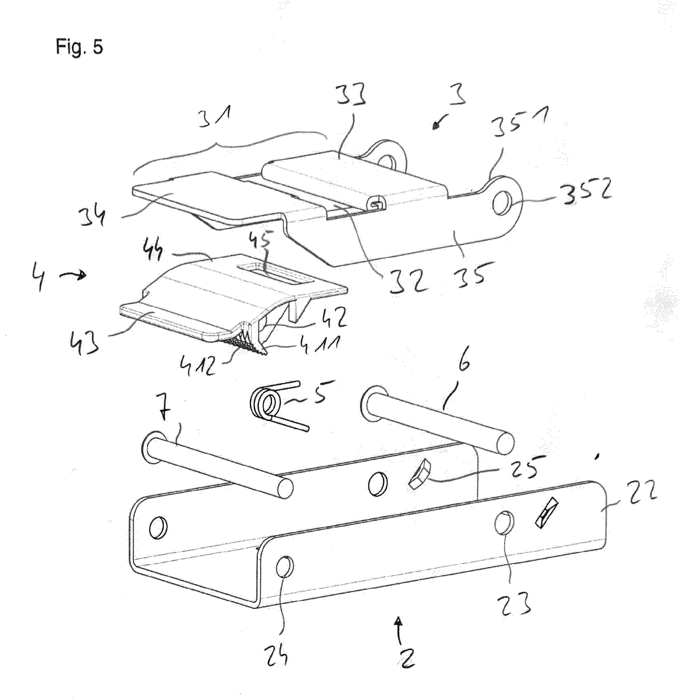

- Figur 5: die Explosionsdarstellung des Gurtspanners aus Figur 1.

Der als Ausführungsbeispiel gewählte Gurtspanner 1 ist zum Spannen eines Gurtes vorgesehen, der an einer Plane eines Lastkraftwagens, Anhängers, Aufliegers für Sattelzugmaschinen, Eisenbahnwaggons o.dgl. angreift, wobei mit einer Vielzahl von Gurten und Gurtspannern 1 das untere Ende der Plane an einem Bodenelement o.dgl. beispielsweise des Lastkraftwagens festspannbar ist.

Der Gurtspanner 1 umfasst ein U-förmig ausgebildetes Basisteil 2, einen über eine erste Achse 6 schwenkbar mit diesem verbundenen, ebenfalls U-förmig ausgebildeten Spannhebel 3 sowie ein über eine zweite Achse 7 schwenkbar mit dem Basisteil 2 verbundenes Gurtklemmstück 4, das über eine als Schenkelfeder ausgebildete Torsionsfeder 5 , die auf die zweiten Achse 7 aufgeschoben ist, in Richtung des Bodens 21 des Basisteils 2 vorgespannt ist.

Das Basisteil 2 ist einstückig aus einem Boden 21 sowie zwei an dessen Längsseiten parallel zueinander angestellten Seitenwangen 22 gebildet. Der Boden ist mit einer Öffnung 211 zur Durchführung eines Gurtes 8 versehen. In die beiden Seitenwangen 22 sind gegenüberliegend erste Bohrungen 23 zur Aufnahme der ersten Achse 6 und beabstandet zu diesen zweite Bohrungen 24 zur Aufnahme der zweiten Achse 7 eingebracht. Beabstandet zur ersten Bohrung 23 sind in die Seitenwangen 22 gegenüberliegend schräg zum Boden 21 angestellte, in Richtung der jeweiligen anderen Seitenwange 22 auskragende Anschläge 25 ausgestellt.

Der Spannhebel 3 ist einstückig aus einem Deckelteil 31 sowie an dessen Längsseiten parallel zueinander angestellten Seitenwangen 35 gebildet. Das Deckelteil 31 ist in Längsrichtung versetzt zu den Seitenwangen 35 angeordnet, wodurch die endseitigen Abschnitte 351 der Seitenwangen 35 frei hervorkragen. Die endseitigen Abschnitte 351 sind gegenüberliegend mit einer Bohrung 352 zur Aufnahme der ersten Achse 6 versehen.

In das Deckelteil 31 ist eine Ausnehmung 32 eingebracht, wodurch ein Gurtführungsabschnitt 33 und ein Handhabungsabschnitt 34 gebildet sind. An seiner die Ausnehmung 32 begrenzenden Seite ist der Gurtführungsabschnitt U-förmig um 180° in Richtung der Seitenwangen 35 umgebogen, wodurch eine gerundete Kante 331 gebildet ist.

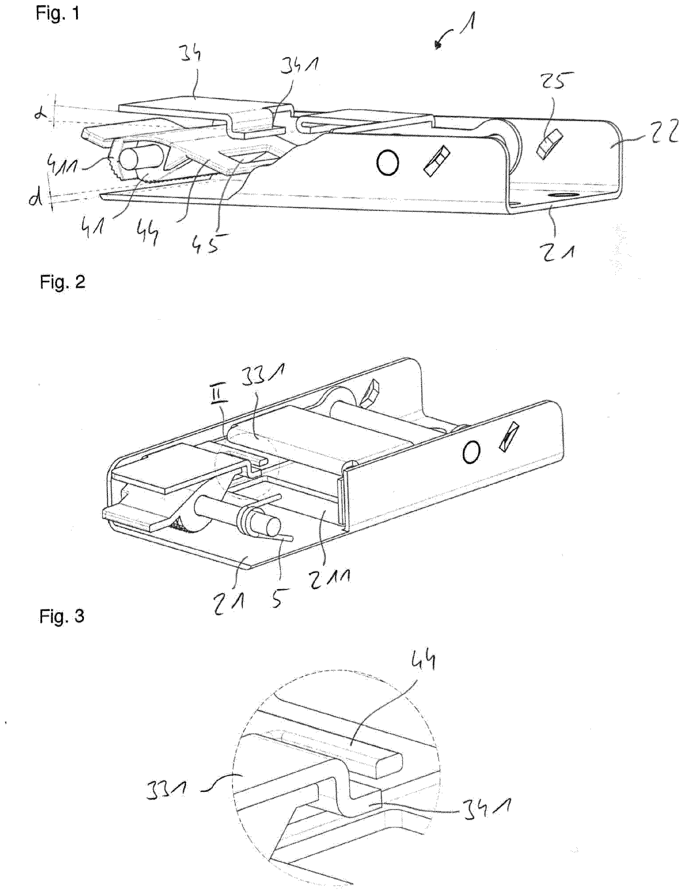

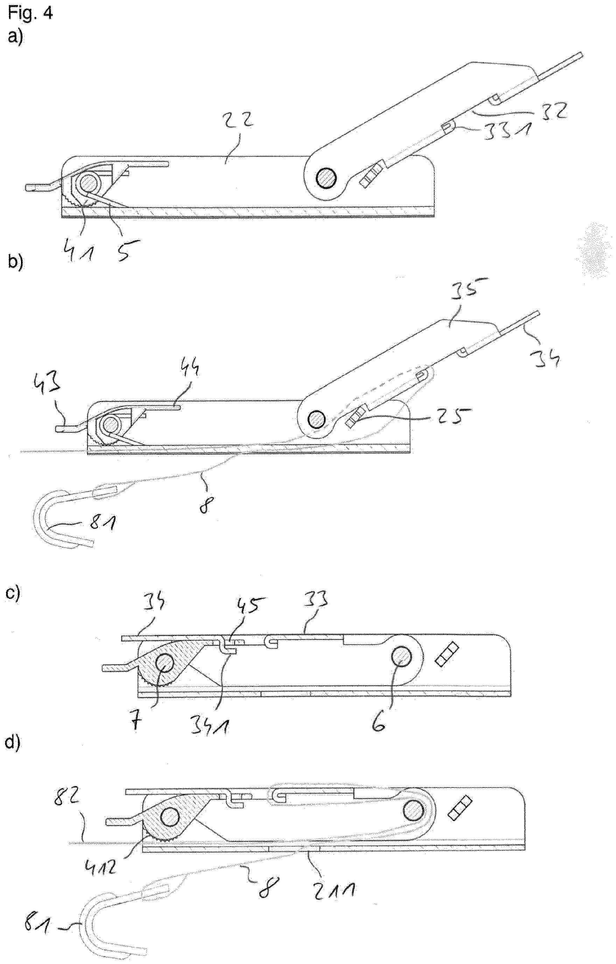

Der Handhabungsabschnitt 34 ist an seiner die Ausnehmung 32 begrenzenden Seite L-förmig in Richtung der Seitenwangen 35 abgekantet, wodurch ein Haken 341 gebildet ist, wie in Figur 2 dargestellt. An seinem dem Haken 341 gegenüberliegenden Ende ragt der Handhabungsabschnitt 34 in der Geschlossenstellung über den Boden 21 des Basisteils 2 hervor (vgl. Figur 4 c)).

Das Gurtklemmstück 4 umfasst einen Walzenkörper 41, der über eine exzentrisch in diesem angeordnete Längsbohrung 42 auf der zweiten Achse 7 schwenkbar gelagert ist. Der Walzenkörper 41 ist an einer dem Boden 21 des Basisteils 2 zugewandten zylinderausschnittförmigen Mantelfläche 411 mit einer Flächenverzahnung 412 versehen. An dem Walzenkörper 41 ist ein Bedienhebel 43 angeordnet, über den das Gurtklemmstück 4 um die zweite Achse 7 schwenkbar ist und der in einer Geschlossenstellung des Spannhebels 3 dessen Handhabungsabschnitt 34 in Längsrichtung überragt. Der Bedienhebel 43 geht in ein Schließblech 44 über, das eine rechteckige Ausnehmung 45 zum Eingriff des Hakens 341 des Handhabungsabschnitts 34 des Spannhebels 3 aufweist. Das Gurtklemmstück 4 ist im Ausführungsbeispiel einteilig als Metallgussteil hergestellt. Alternativ kann dieses auch als Kunststoffspritzgussteil hergestellt sein.

Der Haken 341 des Spannhebels 3 und die Ausnehmung 45 des Schließblechs 44 sind derart ausgebildet, dass der Haken 341 des Handhabungsabschnitts 34 in der Geschlossenstellung des Spannhebels 3 die Ausnehmung 45 des Schließblechs 44 durchdringt und diese hintergreift, wodurch der Spannhebel 3 mit dem Gurtklemmstück 4 verriegelt ist (vgl. Figur 2) und wobei das Schließblech 44 durch eine Schwenkbewegung des Gurtklemmstücks 4 entgegen der Vorspannung der Torsionsfeder 5 außer Eingriff mit dem Haken 341 des Spannhebels 3 bringbar ist, wodurch der Spannhebel 3 entriegelt ist. Zur Entriegelung kann der den Handhabungsabschnitt 34 überragende Bedienhebel 43 des Gurtklemmstücks 4 mit einer Hand einfach in Richtung des Deckelteils 31 gezogen werden, wodurch das Gurtklemmstück 4 gegen die Vorspannkraft der Torsionsfeder 5 um den Schwenkwinkel α verschwenkt wird, wodurch die Entriegelung bewirkt wird (vgl. Figur 1).

In den Figuren 4 b) und 4d) ist der Gurtspanner 1 mit schematisch dargestelltem, eingelegtem Gurt 8 gezeigt. Im montierten Zustand ist der Boden 21 des Basisteils an einer Lkw-Plane - meist durch Vernieten - befestigt. Das an einem durch die Öffnung 211 des Bodens 21 des Basisteils 2 geführte Ende des Gurtes 8 angeordnete Hakenblech 81 ist an einem Rahmenteil des Lkws dieses hintergreifend angeordnet. Wird der Spannhebel 3 in die Geschlossenstellung verbracht, hintergreift der Haken 341 wie vorstehend beschrieben das Schließblech 44 des Gurtklemmstücks 4, wodurch der Spannhebel 3 in der Geschlossenstellung mit dem Gurtklemmstück 4 verriegelt ist. Der Gurt 8 ist um die erste Achse 6 sowie um die gerundete Kante 331 des Gurtführungsabschnitts 33 geführt; das andere, freie Ende 82 des Gurtes 8 verläuft zwischen dem Boden 21 des Basisteils 2 und dem Gurtklemmstück 4 (vgl. Figur 4 d)).

Zum Spannen des Gurtes 8 wird Zug auf dessen freies Ende 82 ausgeübt, wodurch der exzentrisch auf der zweiten Achse 7 gelagerte Walzenkörper 41 des Gurtklemmstücks 4 im Uhrzeigersinn verschwenkt wird. (Durch die Flächenverzahnung 412 des Walzenkörpers 41 ist eine große Haftreibung zwischen Walzenkörper 41 und Gurt 8 bewirkt). Durch die exzentrische Schwenkbewegung wird der Abstand d zwischen dem Walzenkörper 41 und dem Boden 21 des Basisteils 2 vergrößert, wodurch ein freies Gleiten des Gurtes 8 beim Spannen gewährleistet ist.

Durch eine auf den Gurt 8 in die dem freien Ende 82 entgegengesetzte Richtung wirkende Zugkraft wird der Walzenkörper 41 des Gurtklemmstücks 4 im Gegenuhrzeigersinn verschwenkt, wodurch der Abstand d zwischen dem Walzenkörper 41 und dem Boden 21 des Basisteils 2 verkleinert wird - der Gurt 8 wird zunehmend zwischen dem Walzenkörper 41 und dem Boden 21 des Basisteils 2 verklemmt. Einem Durchrutschen des Gurtes 8 ist so zuverlässig entgegengewirkt.

## Patentansprüche

1. Gurtspanner (1) zum Spannen einer Plane eines Lkws oder eines Anhängers, umfassend ein U-förmig ausgebildetes Basisteil (2) mit einem Boden (21) und zwei Seitenwangen (22), und einen an den Seitenwangen (22) des Basisteils (2) aus einer Offenstellung in eine Geschlossenstellung des Gurtspanners (1) schwenkbar gelagerten, U-förmig ausgebildeten Spannhebel (3) mit einem Deckelteil (31) und zwei Seitenwangen (35), wobei ein Gurtklemmstück (4) angeordnet ist, das zwischen den Seitenwangen (22) des Basisteils (2) schwenkbar gelagert und über ein Federelement gegen den Boden (21) des Basisteils (2) vorgespannt ist, wobei an dem Gurtklemmstück (4) ein Bedienhebel (43) angeordnet ist, über den das Gurtklemmstück (4) schwenkbar ist, **dadurch gekennzeichnet, dass** der Bedienhebel (43) des Gurtklemmstücks (4) in einer Geschlossenstellung des Spannhebels (3) dessen Deckelteil (31) in Längsrichtung überragt.

2. Gurtspanner nach Anspruch 1, **dadurch gekennzeichnet, dass** an dem Gurtklemmstück (4) ein Schließblech (44) angeordnet ist, das eine Ausnehmung (45) aufweist, in die ein an dem Deckelteil (31) des Spannhebels (3) angeordneter Haken (341) in einer Geschlossenstellung des Spannhebels (3) eingreift und das Schließblech (44) hintergreift.

3. Gurtspanner nach Anspruch 2, **dadurch gekennzeichnet, dass** der Haken (341) des Spannhebels und die Ausnehmung (45) des Schließblechs (44) derart ausgebildet sind, dass das an dem Gurtklemmstück (4) angeordnete Schließblech (44) durch eine Schwenkbewegung entgegen der Vorspannung des Federelements außer Eingriff mit dem Haken (341) des Spannhebels (3) bringbar ist, wobei das Federelement vorzugsweise eine Torsionsfeder (5) ist.

4. Gurtspanner nach Anspruch 2 oder 3, **dadurch gekennzeichnet, dass** der Haken (341) durch einen abgewinkelten oder umgebogenen Abschnitt des Deckelteils (31) gebildet ist.

5. Gurtspanner nach einem der Anspruche 2 bis 4, **dadurch gekennzeichnet, dass** das Deckelteil (31) einen Gurtführungsabschnitt (33) und einen Handhabungsabschnitt (34) aufweist, zwischen denen eine Ausnehmung (32) zur Durchführung eines Gurtes (8) angeordnet ist, wobei der Haken (341) an dem Handhabungsabschnitt angeordnet ist.

6. Gurtspanner nach Anspruch 5, **dadurch gekennzeichnet, dass** der Gurtführungsabschnitt (33) an seiner dem Handhabungsabschnitt (34) zugewandten Seite abgerundet, vorzugsweise um 180° umgebogen ist.

7. Gurtspanner nach einem der vorgenannten Ansprüche, **dadurch gekennzeichnet, dass** das Gurtklemmstück (4) an seiner dem Boden (21) des Basisteils (2) zugewandten Seite eine zylinderausschnittförmige Mantelfläche (411) aufweist, die derart exzentrisch mit einer zwischen den Seitenwangen (22) des Basisteils (2) angeordneten Achse (7) schwenkbar verbunden ist, dass durch Schwenken des Gurtklemmstücks (4) eine Veränderung des Abstandes zwischen Gurtklemmstück (4) und Boden (21) erzielt ist.

8. Gurtspanner nach Anspruch 7, **dadurch gekennzeichnet, dass** die zylinderausschnittförmige Mantelfläche (411) mit einer Flächenverzahnung (412) versehen ist.

9. Gurtspanner nach einem der vorgenannten Ansprüche, **dadurch gekennzeichnet, dass** in den Seitenwangen (22) des Basisteils (2) zwei gegenüberliegend angeordnete, nach innen kragende Anschläge (25) eingebracht sind, an denen der Spannhebel (3) in einer Offenstellung anliegt.

10. Gurtspanner nach einem der vorgenannten Ansprüche, **dadurch gekennzeichnet, dass** das Basisteil (2) und/oder der Spannhebel (3) jeweils als einteiliges Blechbiegestanzteil hergestellt sind.

## Claims

1. Belt tensioner (1) for tensioning a tarpaulin of a lorry or a trailer, comprising a U-shaped base part (2) with a base (21) and two side cheeks (22) and a U-shaped tensioning lever (3) with a cover part (31) and two side cheeks (35), which is mounted on the side cheeks (22) of the base part (2) so as to be pivotable from an open position into a closed position of the belt tensioner (1), wherein a belt clamping piece (4) is arranged, which is pivotably mounted between the side cheeks (22) of the base part (2) and is pretensioned against the base (21) of the base part (2) via a spring element, wherein an operating lever (43) is arranged on the belt clamping piece (4), via which the belt clamping piece (4) is pivotable, **characterised in that** the operating lever (43) of the belt clamping piece (4) projects longitudinally beyond the cover part (31) of the tensioning lever (3) in a closed position of the latter.

2. Belt tensioner according to claim 1, **characterised in that** a striking plate (44) is arranged on the belt clamping piece (4), which has a recess (45), in which a hook (341) arranged on the cover part (31) of the tensioning lever (3) engages in a closed position of the tensioning lever (3) and engages behind the striking plate (44).

3. Belt tensioner according to claim 2, **characterised in that** at the hook (341) of the tensioning lever and the recess (45) of the striking plate (44) are designed in such a manner that the striking plate (44) arranged on the belt clamping piece (4) can be brought out of engagement with the hook (341) of the tensioning lever (3) by a pivoting movement counter to the pretension of the spring element, wherein the spring element is preferably a torsion spring (5).

4. Belt tensioner according to claim 2 or 3, **characterised in that** the hook (341) is formed by an angled or bent-over section of the cover part (31).

5. Belt tensioner according to one of claims 2 to 4, **characterised in that** the cover part (31) has a belt guide section (33) and a handling section (34), between which a recess (32) for the passage of a belt (8) is arranged, wherein the hook (341) is arranged on the handling section.

6. Belt tensioner according to claim 5, **characterised in that** the belt guide section (33) is rounded on its side facing the handling section (34), preferably bent by 180°.

7. Belt tensioner according to one of the previous claims, **characterised in that** the belt clamping piece (4) has, on its side facing the base (21) of the base part (2), an outer surface (411) in the shape of a cylindrical cut-out, which is pivotably connected eccentrically to an axle (7) arranged between the side cheeks (22) of the base part (2) in such a manner that a change in the distance between belt clamping piece (4) and base (21) is achieved by pivoting the belt clamping piece (4).

8. Belt tensioner according to claim 7, **characterised in that** the outer surface (411) in the shape of a cylindrical cut-out is provided with a surface toothing (412).

9. Belt tensioner according to one of the previous claims, **characterised in that** two oppositely arranged, inwardly projecting stops (25) are provided in the side cheeks (22) of the base part (2), against which stops the tensioning lever (3) rests in an open position.

10. Belt tensioner according to one of the previous claims, **characterised in that** the base part (2) and/or the tensioning lever (3) are each manufactured as a one-piece sheet metal bending stamped part.

## Revendications

1. Tendeur de courroie (1) pour tendre une bâche d'un camion ou d'une remorque, comprenant une partie de base (2) en forme de U avec un fond (21) et deux joues latérales (22) et un levier de tension (3) en forme de U avec une partie de couvercle (31) et deux joues latérales (35), logé sur les joues latérales (22) de la partie de base (2) de manière à pouvoir pivoter d'une position ouverte dans une position fermée du tendeur de courroie (1), sachant qu'une pièce de serrage de courroie (4) qui est logée entre les joues latérales (22) de la partie de base (2) de manière à pouvoir pivoter est disposée et prétendue contre le fond (21) de la partie de base (2) via un élément à ressort, sachant qu'un levier de commande (43) via lequel la pièce de serrage de courroie (4) peut pivoter est disposé sur la pièce de serrage de courroie (4), **caractérisé en ce qu'**en position fermée du levier de tension (3), le levier de commande (43) de la pièce de serrage de courroie (4) dépasse de sa partie de couvercle (31) dans le sens de la longueur.

2. Tendeur de courroie selon la revendication 1, **caractérisé en ce qu'**une tôle de fermeture (44) est disposée sur la pièce de serrage de courroie (4), tôle de fermeture qui présente un évidement (45) dans lequel, en position fermée du levier de tension (3), un crochet (341) disposé sur la partie de couvercle (31) du levier de tension (3) s'engrène et vient en prise arrière la tôle de fermeture (44).

3. Tendeur de courroie selon la revendication 2, **caractérisé en ce que** le crochet (341) du levier de tension et l'évidement (45) de la tôle de fermeture (44) sont formés de telle manière que la tôle de fermeture (44) disposée sur la pièce de serrage de courroie (4) peut être mise hors de prise avec le crochet (341) du levier de tension (3) par un mouvement de pivotement contraire à la prétension de l'élément à ressort, sachant que l'élément à ressort est de préférence un ressort de torsion (5).

4. Tendeur de courroie selon la revendication 2 ou 3, **caractérisé en ce que** le crochet (341) est formé par une section coudée ou courbée de la partie de couvercle (31).

5. Tendeur de courroie selon l'une des revendications 2 à 4, **caractérisé en ce que** la partie de couvercle (31) présente une section de guidage de courroie (33) et une section de manipulation (34) entre lesquelles un évidement (32) est disposé pour faire passer une courroie (8), sachant que le crochet (341) et disposé sur la section de manipulation.

6. Tendeur de courroie selon la revendication 5, **caractérisé en ce que** la section de guidage de courroie (33) est arrondie, de préférence courbée de 180°, sur son côté tourné vers la section de manipulation (34).

7. Tendeur de courroie selon l'une des revendications précédentes, **caractérisé en ce que** la pièce de serrage de courroie (4) présente sur son côté tourné vers le fond (21) de la partie de base (2) une surface enveloppante (411) en forme d'évidement cylindrique qui est reliée de façon excentrique à un axe (7) disposé entre les joues latérales (22) de la partie de base (2) de manière à pouvoir pivoter, que par le pivotement de la pièce de serrage de courroie (4), une modification de l'écart entre la pièce de serrage de courroie (4) et le fond (21) est obtenue.

8. Tendeur de courroie selon la revendication 7, **caractérisé en ce que** la surface enveloppante (411) en forme d'évidement cylindrique est dotée d'une denture de surface (412).

9. Tendeur de courroie selon l'une des revendications précédentes, **caractérisé en ce que** dans les joues latérales (22) de la partie de base (2), deux butées (25) disposées en face l'une de l'autre, proéminentes vers l'intérieur, avec lesquelles le levier de tension (3) est en contact en position ouverte, sont introduites.

10. Tendeur de courroie selon l'une des revendications précédentes, **caractérisé en ce que** la partie de base (2) et/ou le levier de tension (3) sont respectivement fabriqués en tant que pièce en tôle monobloc pliée et poinçonnée.
